# EUROPEAN PATENT SPECIFICATION

(11) **EP 1 614 025 B1**
(45) Date of publication and mention of the grant of the patent: **06.06.2007**
(21) Application number: 04722919.0
(22) Date of filing: 24.03.2004
(51) Int. Cl.: G06F 3/06, G11B 7/007, G11B 20/12

(54) **DATA CARRIER FOR STORING FILES, APPARATUS FOR MANAGING SUCH A CARRIER AND METHOD FOR PROCESSING DATA IN SUCH A CARRIER**
DATENTRÄGER ZUM SPEICHERN VON DATEIEN, VORRICHTUNG ZUM MANAGEN EINES SOLCHEN DATENTRÄGERS UND VERFAHREN ZUM BEARBEITEN VON DATEN IN SOLCH EINEM DATENTRÄGER
SUPPORT DE DONNEES POUR STOCKER DES FICHIERS, APPAREIL DE GESTION DU SUPPORT ET PROCEDE DE TRAITEMENT DE DONNEES DANS LE SUPPORT

(30) Priority: 04.04.2003 EP 03290853
(43) Date of publication of application: 11.01.2006
(73) Proprietor: Koninklijke Philips Electronics N.V., 5621 BA Eindhoven (NL)
(72) Inventor: KELLY, Declan, Patrick, F-75008 PARIS (FR); VAN GASSEL, Jozef, Pieter, F-75008 PARIS (FR); BLACQUIERE, Johannis, Friso, Rendert, F-75008 PARIS (FR); WIJNANDS, Rudi, Jozef, Marie, F-75008 PARIS (FR); SCHOLL, Gerrit, Jan, F-75008 PARIS (FR)
(74) Representative: van Oudheusden-Perset, Laure E.
(86) International application number: PCT/IB2004/000991
(87) International publication number: WO 2004/088497

(56) References cited:
- EP-A- 1 128 254
- US-A1- 2002 018 410
- US-A1- 2002 159 369
- PATENT ABSTRACTS OF JAPAN vol. 1997, no. 11, 28 November 1997 (1997-11-28) -& JP 09 186963 A (SONY CORP), 15 July 1997 (1997-07-15) -& US 6 731 864 B1 (ITO YOSHIYUKI ET AL) 4 May 2004 (2004-05-04)

## Description

The present invention relates to a data carrier for storing files.

The invention also relates to an apparatus for managing the files stored in a data carrier comprising a light source for illumination, an optical data carrier, and a motor for driving said data carrier.

The patent documents WO 00/58958, EP-A 1 128 254, US-A 2002 159 369, US-A2002 018 410 disclose such apparatus. The preamble of claim 1 is based on EP-A-1 128 254.

The invention finds its application notably in optical data carriers, known as SFFO (Small Form-Factor Optical), having the ability to be rewritable. These data carriers are used with apparatus supplied by batteries, so it is important that the battery life is as long as possible.

The SFFO carriers are driven at constant angular velocity. The measures that the invention proposes turn to account the properties of the constant angular velocity.

A data carrier in accordance with the invention comprises files is remarkable in that the files often required by the user being in locations that provide a high file transfer rate, and in that it comprises a frequency file for containing an indication of the use of files contained in it.

The basic idea of the invention is that the supply power is consumed when the carrier is driven and the light source is on. For example if the user often wants to play a MP3 file having 4.5 MB, it takes Is for being transfered into a process unit for being listened to by the user if the file is on the outer part and 2s if the file is on the inner part of the disc. Supply power is thus economized in that the motor and the source light are used less.

The invention relates to an optical data carrier according to claim 1 and an apparatus according to claim 5.

These and other aspects of the invention are apparent from and will be elucidated, by way of non-limitative example, with reference to the embodiment(s) described hereinafter.

In the drawings:
Fig.1 shows an apparatus in accordance with the invention,
Fig.2 shows a data carrier in accordance with the invention
Fig.3 shows a block scheme of a processor set for an apparatus in accordance with the invention.
Fig.4 shows a scheme for the managing of files in a data carrier in accordance with the invention.

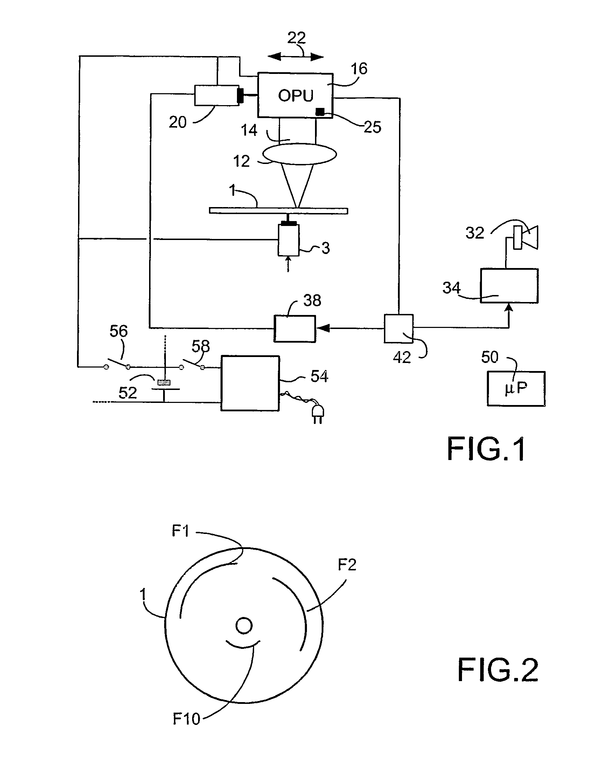

Fig. 1 shows an apparatus in which a data carrier 1 having a disc shape is placed. This data carrier may be an optical disc. In Fig. 1, the carrier is shown in cross-section. A disc motor 3 rotates the carrier. On this carrier 1, a lens 12 focuses a laser light beam 14. The laser is mounted in a sledge 16 that can be moved by a sledge motor 20 for exploring the whole disc as indicated by the arrow 22. Inside this sledge, a laser diode 25 is placed for illuminating the optical data carrier. The sledge also contains photo detectors, not shown, that provide signals. These signals are used, on the one hand, for providing useful information, for instance to a loudspeaker 32 via a user interface circuit 34 and, on the other hand, for controlling various servos via a control interface 38. A splitter device 42 splits these signals for being correctly directed to the interface circuits 34 and 38. A processor set 50 controls the overall operation of the apparatus. A battery 52 supplies this apparatus. A charger device 54 can charge the battery when this is needed. Two switches 56 and 58 are used in supplying of the apparatus. When the switch 56 is on, the motors 20 and 3 are supplied and so is the laser diode 25. When it is off said elements 20, 3 and 25 are not supplied. The other elements of the apparatus remain supplied. A major part of the energy is consumed when the switch 56 is on.

When a file placed on the disc 1 is required, the disc 1 is driven at a constant speed or angular velocity (CAV). The data rate is thus higher at the outer radius of the disc than at the inner. For example, the bit rate is about 18 Mbps at the inner and 36 Mbps at the outer radius. Then reading of the same file from the inner radius instead of the outer radius requires one second longer. During this second the laser diode 25 is switched on and the disc 1 is spinning. The difference in supply power is significant. The switch 56 can be off after the transfer and an economy of energy is obtained when the transfer time is shorter.

The invention proposes to allocate the most frequently used files close to the outer radius, so that the battery life can be significantly increased.

Fig.2 shows, highly schematically, the locations of various files on the optical disc 1. The files F 1 and F2 are files frequently used and file F 10 is less used.

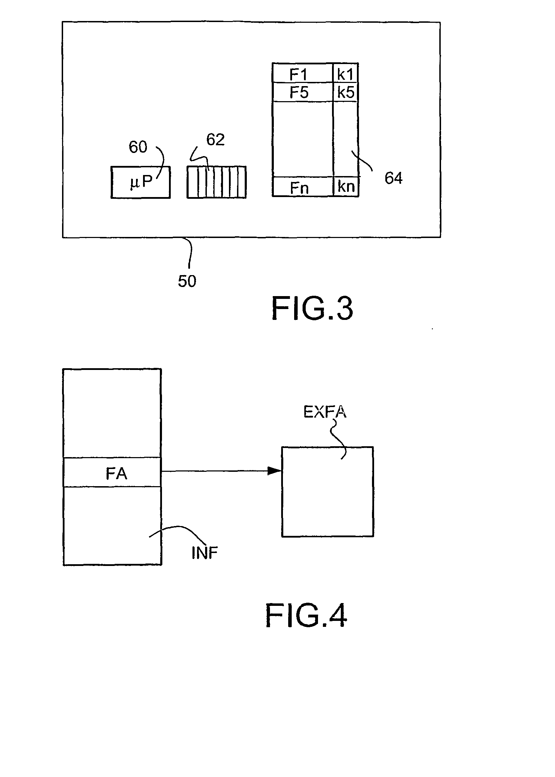

Analyzing the use of the files renders it possible to determine how often they are read. The processor set 50 as shown in the Fig.3 comprises a processor 60 with a counter 62, which can be realized by software means, and a table 64. Thus it is possible to store the repetitions of file usage. In this table 64, the names of used files F1, F5,...Fn are stored in comparison with the number of times each file is used k1, k5,.. kn. Another way is to take into account the order of the files as defined by the playlists (taking into account the most frequently used playlists) The counters may be reset after the files on the disc have been reallocated for placing the more frequently used file in the outer most locations of the disc. This may distort the system because a file may have been used a lot during a short period and this usage need not reflect the longer-term file usage. Alternatively, the date the file was last used may be stored along with the counter to record whether the file was recently used. When performing the re-allocation, other factors need to be taken into account as well as the frequency of file usage. For example, the size of the files must be considered.

The reallocation will typically be done when the disc is in an apparatus connected to a power supply, e.g. when it is recharging its batteries or when the disc is placed in a fixed device such as a PC. The system may want to record when re-allocation was last performed so that the files are not reallocated too often (this may result in degradation of the disc as the same fast locations are overwritten too often).

Another embodiment of the invention proposes to use the UDF File system well known in the state of the art.

There are two ways to implement this feature in the UDF File System. In both cases an UDF implementation that is not aware of this feature will still be able to read the files without problem.

UDF allows applications to define an extension to the File Entry table for their own use. This is called "Application Use Extended Attribute" (see Fig.4). The table INF shown in Fig.4 provides for a given file FA a room EXFA for an extra information. The usage is not defined in the UDF specification; it is up to the application using the file system to decide how to use it. The way this will work in practice is that the application will read and set the values of this field and therefore control its use. This field is specified in the UDF file system, so an implementation that does not support this extension field will still be able to read a disc that does use it. This extra field may be used to implement file usage counting but it may lead to problems if an implementation already uses this field for another purpose. With this solution the counting must be done by the file system, the application will know nothing about this field Controlling the file counting from the application has an advantage because the application knows whether the file was actually used by the user. For example, the user may have skipped an audio track after a few seconds. In this case the application may choose not to count this as a file usage. Similarly, files may be accessed on disc and cached by the application but then not used by the user.

The re-allocation may also be performed under the application control. For example, when the disc is placed in a drive connected to a power supply (e.g. a PC), an application may analyse the file usage and then decide how to optimally re-allocate the file data. Then the application may choose to re-allocate the files so that the most frequently used files are recorded on the outside of the disc. One way to do this is for the application to treat the disc as a block device and bypass the normal file system implementation. The application will create a disc image with the files in the correct locations and then copy the complete disc image including File System tables to disc.

It is also possible to let the file system perform the reallocation, but then the file system implementation must implement the specific reallocation strategy.

## Claims

1. An optical data carrier having rewritable ability for storing files, comprising files, the transfer rate of which is dependent of their locations on the data carrier, the files often required by the user being in locations that provide a high file transfer rate, **characterized in that** it comprises a frequency file for containing an indication of the use of files contained in it.

2. A data carrier as claimed in claim 1, which is an optical data carrier having a disc shape.

3. A data carrier as claimed in claim 1 or 2, wherein the frequency file is an UDF file type.

4. A data carrier as claimed in claim 1 or 2 or 3, which is of the SFFO type.

5. An apparatus suitable for managing a data carrier as claimed in claims 1 to 4 comprising supply economizing means constitued by driving means for driving said data carrier, means for reading the data stored in it, means for writing data in it, frequency means for determining the frequency of use of files contained in the data carrier cooperating with the frequency file, allocating means for placing the more frequently used files in locations providing a faster transfer, and means for stopping at least said driving means when the transfer has been completed.

6. An apparatus as claimed in claim 5, wherein the frequency means are constituted by a table indicating the name of each file in relation to the number of times said file is used.

7. An apparatus as claimed in claim 6 , wherein the frequency means are constituted by a component which is placed on the data carrier.

8. An apparatus as claimed in claims 5 to 7 , comprising a battery for supplying said apparatus, charging means for charging said battery, said allocating means being put into operation during the charging.

## Patentansprüche

1. Optischer Datenträger mit der Fähigkeit zur Wiederbeschreibung zum Speichern von Dateien, welcher Dateien umfasst, deren Übertragungsgeschwindigkeit von ihren Speicherorten auf dem Datenträger abhängig ist,
wobei sich die Dateien, die von dem Benutzer oft benötigt werden, an Speicherorten befinden, welche eine hohe Dateiübertragungsgeschwindigkeit gewährleisten,
**dadurch gekennzeichnet, dass** er eine Häufigkeitsdatei umfasst, die eine Angabe der Verwendung von in ihm enthaltenen Dateien enthält.

2. Datenträger nach Anspruch 1, welcher ein optischer Datenträger ist, der eine Plattenform aufweist.

3. Datenträger nach Anspruch 1 oder 2, wobei die Häufigkeitsdatei vom Typ einer UDF-Datei ist.

4. Datenträger nach Anspruch 1 oder 2 oder 3, welcher vom SFFO-Typ ist.

5. Gerät, welches zum Verwalten eines Datenträgers nach den Ansprüchen 1 bis 4 geeignet ist, das Mittel zur Energieeinsparung umfasst, die gebildet werden von Antriebsmitteln zum Antreiben des Datenträgers, Mitteln zum Lesen der in ihm gespeicherten Daten, Mitteln zum Schreiben von Daten in ihm, Häufigkeitsmitteln zum Bestimmen der Häufigkeit der Verwendung von in dem Datenträger enthaltenen Dateien, die mit der Häufigkeitsdatei zusammenwirken, Verteilungsmitteln zum Anordnen der häufiger verwendeten Dateien an Speicherorten, die eine schnellere Übertragung gewährleisten, und Mitteln zum Stoppen wenigstens der Antriebsmittel, wenn die Übertragung abgeschlossen ist.

6. Gerät nach Anspruch 5, wobei die Häufigkeitsmittel von einer Tabelle gebildet werden, in welcher der Name jeder Datei zusammen mit der Anzahl, wie oft die Datei verwendet wurde, angegeben ist.

7. Gerät nach Anspruch 6, wobei die Häufigkeitsmittel von einer Komponente gebildet werden, welche auf dem Datenträger angeordnet ist.

8. Gerät nach den Ansprüchen 5 bis 7, das eine Batterie zur Versorgung des Gerätes und Lademittel zum Laden der Batterie umfasst, wobei die Verteilungsmittel während des Ladens in Betrieb gesetzt werden.

## Revendications

1. Support optique de données qui a une capacité réinscriptible pour stocker des fichiers, comprenant des fichiers dont la vitesse de transfert est fonction de leur localisation sur le support de données,
les fichiers fréquemment requis par l'utilisateur étant dans des localisations qui procurent une vitesse de transfert élevée,
**caractérisé en ce qu'**il comprend un fichier de fréquence contenant une indication de l'utilisation de fichiers qui y sont contenus.

2. Support de données selon la revendication 1 qui est un support optique de données qui est en forme de disque.

3. Support de données selon la revendication 1 ou 2, dans lequel le fichier de fréquence est un fichier de type UDF.

4. Support de données selon la revendication 1 ou 2 ou 3, qui est du type SFFO.

5. Appareil qui convient pour gérer un support de données selon les revendications 1 à 4, comprenant un moyen qui économise l'énergie d'alimentation, constitué par un moyen d'entraînement pour entraîner ledit support de données, un moyen pour lire des données qui y sont stockées, un moyen pour y écrire des données, un moyen de fréquence coopérant avec le fichier de fréquence pour déterminer la fréquence d'utilisation de fichiers contenus dans le support de données, un moyen de répartition pour placer les fichiers plus fréquemment utilisés en des localisations qui procurent un transfert plus rapide, et un moyen pour arrêter au moins ledit moyen d'entraînement quand le transfert est terminé.

6. Appareil selon la revendication 5, dans lequel le moyen de fréquence est constitué par une table qui indique le nom de chaque fichier en correspondance avec le nombre de fois que ledit fichier est utilisé.

7. Appareil selon la revendication 6, dans lequel le moyen de fréquence est constitué par un composant qui est placé sur le support de données.

8. Appareil selon les revendications 5 à 7, comprenant une pile pour alimenter ledit appareil, un moyen de chargement pour charger ladite pile, ledit moyen de répartition étant mis en fonctionnement pendant la charge.
